# EUROPEAN PATENT APPLICATION

(11) **EP 4 357 962 A1**
(43) Date of publication of application: **24.04.2024**
(21) Application number: 23204712.6
(22) Date of filing: 19.10.2023
(51) Int. Cl.: G06F 30/20, G06F 111/10

(54) **ANTENNA DESIGN USING ARTIFICIAL INTELLIGENCE**

(30) Priority: 19.10.2022 US 202218048007
(71) Applicant: Meta Platforms Technologies, LLC, Menlo Park, CA 94025 (US)
(72) Inventor: YANG, Xiaomeng, Menlo Park (US); ZHONG, Yang, Menlo Park (US); RENNER, Peter Eli, Menlo Park (US); MATTSSON, Ulf Jan-Ove, Menlo Park (US); COHEN, Andrew, Menlo Park (US); TIAN, Yuandong, Menlo Park (US); ZHU, Jiang, Menlo Park (US); DOU, Weiping, Menlo Park (US); YE, Geng, Menlo Park (US)
(74) Representative: Murgitroyd & Company

(57) **Abstract**

The disclosed computer-implemented method may include accessing various antenna elements (210) and identifying parameters for an antenna that is to be formed using the accessed antenna elements (220). The method may also include assembling the antenna elements (230), using an artificial intelligence (AI) instance, into an assembled antenna that at least partially complies with the identified parameters. Various other methods, systems, and computer-readable media are also disclosed.

## Description

### TECHNICAL FIELD

The present disclosure is generally directed to a system configured to design, simulate, and optimize antennas using artificial intelligence (Al).

### BACKGROUND OF THE DISCLOSURE

In other systems, antenna engineers have attempted to design antennas for different devices. These engineers may have designed the antennas to exhibit specific gain, efficiency, or other operational characteristics, including a specified frequency band within which the antenna was to operate. This type of antenna design work was highly time intensive and was often limited by the knowledge of the engineer or was at least subject to the design proclivities of that engineer.

### SUMMARY OF THE DISCLOSURE

In accordance with a first aspect of the present disclosure, there is provided a computer-implemented method comprising: accessing one or more antenna elements; identifying one or more parameters for an antenna that is to be formed using the accessed antenna elements; and assembling the antenna elements, using an artificial intelligence (Al) instance, into an assembled antenna that at least partially complies with the identified parameters.

In some embodiments, the Al instance assembles the antenna elements into the assembled antenna without knowledge of other antenna architectures.

In some embodiments, the computer-implemented method further comprises accessing one or more antenna architectures and, wherein the Al instance uses the accessed antenna architectures as background knowledge when assembling the antenna elements into the assembled antenna.

In some embodiments, the computer-implemented method further comprises decomposing one or more antenna architectures to identify the one or more antenna elements.

In some embodiments, a same antenna architecture is decomposed into a plurality of different antenna elements.

In some embodiments, a same set of antenna elements are assembled into a plurality of different assembled antennas.

In some embodiments, the plurality of different assembled antennas are of one or more different antenna types.

In some embodiments, the parameters specify a layout size constraint for the assembled antenna.

In some embodiments, the parameters specify one or more minimum performance characteristics for the assembled antenna.

In some embodiments, the computer-implemented method further comprises optimizing the assembled antenna to improve one or more operational characteristics.

In some embodiments, the Al instance accesses an indication of which operational characteristics are most significant and optimizes the assembled antenna for at least one of the indicated operational characteristics.

In accordance with a further aspect of the present disclosure, there is provided a system comprising: at least one physical processor; and physical memory comprising computer-executable instructions that, when executed by the physical processor, cause the physical processor to: access one or more antenna elements; identify one or more parameters for an antenna that is to be formed using the accessed antenna elements; and assemble the antenna elements, using an artificial intelligence (Al) instance, into an assembled antenna that at least partially complies with the identified parameters.

In some embodiments, the identified parameters limit which locations one or more of the antenna elements is placeable within an electronic device.

In some embodiments, the identified parameters limit a width and/or a height for at least one of the antenna elements and/or for the assembled antenna.

In some embodiments, the assembled antenna is analyzed by a surrogate model to identify one or more operational characteristics of the assembled antenna.

In some embodiments, the surrogate model filters one or more assembled antennas whose performance characteristics are below a minimum performance threshold value.

In some embodiments, the surrogate model implements a knowledge database when determining which assembled antennas to filter out.

In some embodiments, the assembled antenna is provided to a simulation model for a performance simulation.

In some embodiments, performance results from the simulation are provided to a surrogate model to inform future analyses by the surrogate model.

In accordance with a further aspect of the present disclosure, there is provided a non-transitory computer-readable medium comprising one or more computer-executable instructions that, when executed by at least one processor of a computing device, cause the computing device to: access one or more antenna elements; identify one or more parameters for an antenna that is to be formed using the accessed antenna elements; and assemble the antenna elements, using an artificial intelligence (Al) instance, into an assembled antenna that at least partially complies with the identified parameters.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a diagram that includes multiple software and/or hardware modules that may be used to design an antenna using artificial intelligence.
FIG. 2 is a flow diagram of an exemplary method for assembling an antenna using artificial intelligence.
FIGS. 3A-3D illustrate embodiments of different antenna architectures that may be assembled using the embodiments herein.
FIG. 4 illustrates an embodiment of an antenna that is modified to meet specific parameters.
FIGS. 5A and 5B illustrate embodiments of an antenna that is decomposed into different antenna elements and tested for functionality.
FIG. 6 illustrates a diagram of a system for assembling, simulating, scoring, filtering, and optimizing antenna designs.
FIGS. 7A and 7B illustrate groups of antenna architectures generated using artificial intelligence, along with associated simulation results.
FIG. 8 illustrates an embodiment of different antenna architectures that may be optimized for certain frequencies.
FIG. 9 illustrates a diagram of an alternative system for assembling, simulating, scoring, filtering, and optimizing antenna designs.
FIG. 10 illustrates an original antenna architecture and an optimized antenna architecture, along with associated simulation results.
FIG. 11 illustrates a diagram of a system for optimizing antenna designs.
FIGS. 12A-12B illustrate embodiments of an antenna architecture and associated performance results.
FIGS. 13A-13D illustrate antenna architectures that may be designed and optimized using the embodiments herein.
FIGS. 14A-14C illustrate embodiments in which domain knowledge is implemented to design or optimized antennas.
FIG. 15 illustrates an embodiment in which differently sized parasitic elements may be used to modify the frequency response of the associated antenna.
FIG. 16 is an illustration of exemplary augmented-reality glasses that may be used in connection with embodiments of this disclosure.
FIG. 17 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

The present disclosure is generally directed to a system configured to design, simulate, and optimize antennas using artificial intelligence (Al). In some cases, certain design parameters or specifications may be provided when performing these Al operations. In other systems, antenna engineers have attempted to design antennas for different devices. These engineers may have designed the antennas to exhibit specific gain, efficiency, or other operational characteristics, including a specified frequency band within which the antenna was to operate. This type of antenna design work was highly time intensive and was often limited by the knowledge of the engineer or was at least subject to the design proclivities of that engineer.

The embodiments described herein may implement artificial intelligence to design antennas for a given application or device, and within certain specifications or parameters. The systems described herein may be configured to access a set of usable antenna elements of different shapes and sizes. In some cases, these antenna elements may be elements that were previously used in other antennas. These systems may then arrange the placement of the antenna elements within a specified area and form those elements into different antenna shapes and antenna types, using Al techniques to guide the placement of each element.

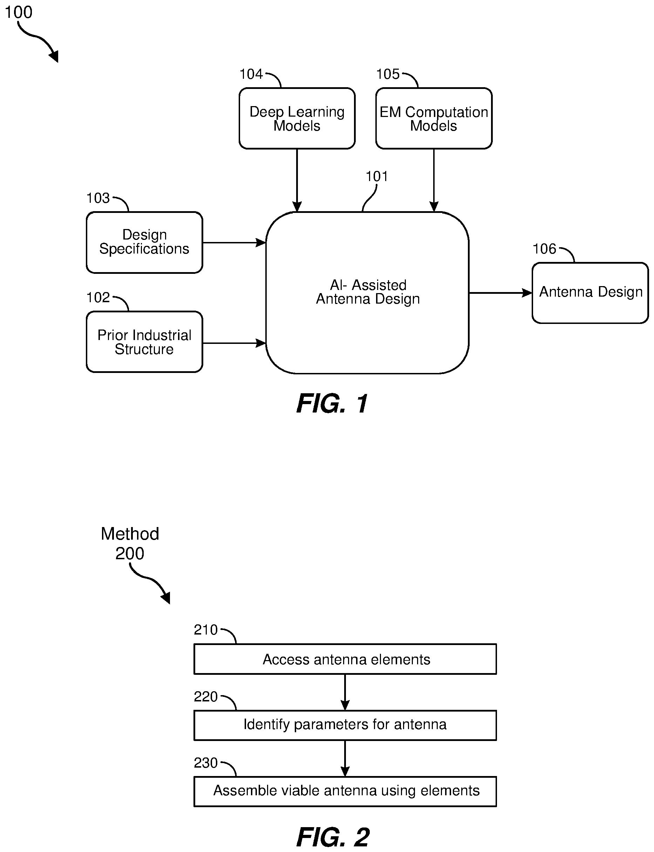

The systems herein may also use Al to improve the performance of the newly designed antennas by optimizing their geometric (or other) parameters. Some embodiments may implement a surrogate model to quickly predict the frequency response of each candidate antenna without having to run through a full simulation (that may be costly and time consuming). Each new antenna design may be assigned a score, and those with a high enough score may be fully simulated and/or subjected to further rounds of optimization. This process or using Al techniques to design and optimize antennas will be described further below with reference to FIGS. 1-17.

Features from any of the embodiments described herein may be used in combination with one another in accordance with the general principles described herein. These and other embodiments, features, and advantages will be more fully understood upon reading the following detailed description in conjunction with the accompanying drawings and claims.

FIG. 1 illustrates a diagram 100 that includes multiple software and/or hardware modules that may be used to design antennas using artificial intelligence. For example, FIG. 1 includes an Al-assisted antenna design module 101. This module may include general purpose processors, special-purpose processors (e.g., machine learning or Al chips), neural networks, or other hardware processors. Additionally or alternatively, the Al-assisted antenna design module 101 may includes software or firmware modules, including associated algorithms, configured to perform Al processing to generate specific outputs (e.g., antenna designs or optimizations) using a set of inputs. As will be understood, the terms "Artificial Intelligence" or "Al processing" may include any type of Al hardware processors, firmware, software algorithms, machine learning, neural networks, deep learning models (e.g., 104), expectation-maximization (EM) computation modules (e.g., 105), or other similar software and/or hardware features.

At least in some cases, the Al-assisted antenna design module 101 may be configured to access prior industrial antenna structures 102. These structures may come from known antenna designs. Since electronic devices have begun implementing wireless antennas, many thousands of different antenna designs have been created and implemented. In some cases, at least some of these prior antenna designs may be accessed by the Al-assisted antenna design module 101. The Al-assisted antenna design module 101 may use these prior antenna structures as background knowledge when performing Al operations including deep learning or performing EM computations.

Still further, the Al-assisted antenna design module 101 may access design specifications 103 when performing Al-assisted antenna design. These "design specifications" 103 may indicate, for example, a minimum or maximum size for an antenna, a type of antenna (e.g., monopole, dipole, loop, slot, inverted-F, inverted-L, Yadi Uda, etc.), a frequency band in which the antenna is to operate, a minimum or maximum amount of gain, a minimum amount of antenna efficiency, minimum or maximum S-parameters, minimum or maximum power usage, effective isotropic radiated power (EIRP), minimum or maximum directionality, or other design characteristics or features. The Al-assisted antenna design module 101 may access and implement some or all of these design specifications when designing antennas. Using the prior industrial structures 102 and/or the design specifications 103, the Al-assisted antenna design module 101 may perform the Al-assisted design using deep learning models 104, EM computation models 105, or other similar Al-related models to create an antenna design 106. The resulting antenna design 106 may then be tested and/or optimized, as will be explained further below with regard to method 200 of FIG. 2.

FIG. 2 is a flow diagram of an exemplary computer-implemented method 200 for assembling and optimizing antennas using artificial intelligence. The steps shown in FIG. 2 may be performed by any suitable computer-executable code and/or computing system, including the systems illustrated in herein. In one example, each of the steps shown in FIG. 2 may represent an algorithm whose structure includes and/or is represented by multiple sub-steps, examples of which will be provided in greater detail below.

As illustrated in method 200 of FIG. 2, at step 210, the systems described herein may access one or more different antenna elements. As the term is used herein, "antenna elements" may refer to different sections of conductive material (e.g., metal, conductive ink, etc.) of a given height, width, or depth. In some cases, these antenna elements may be accessed from a database of antenna elements. These elements may be pieced together to form an antenna. In some embodiments, these antenna elements are portions of prior antenna designs (e.g., 102), while in other cases, the Al-assisted antenna design module 101 may generate new antenna elements or may modify existing elements. At least in some cases, the antenna elements may also include antenna feed elements including grounding elements, feed insertion points, parasitic elements, tuners, amplifiers, signal processors, or other portions of the antenna feed.

At step 220 of method 200, the systems herein may identify one or more parameters for an antenna that is to be formed through artificial intelligence using the accessed antenna elements. These parameters may include design specifications 103 or other indications of how an antenna is to be designed. In one example, the design parameters may specify a length of the antenna, or a total area for a printed antenna. The design parameters may also specify the type of antenna (e.g., slot, monopole, microstrip, etc.). Other parameters including minimum gain, or minimum directionality may also be provided for the antenna that is to be designed using Al techniques.

At step 230 of method 200, an artificial reality instance may assemble the antenna elements into an assembled antenna that at least partially complies with the identified parameters. As the term is used herein, an "artificial reality instance" may refer to a hardware processor (e.g., an Al or ML chip) that has been initiated, or may refer to a software model that has been initiated (e.g., deep learning model 104), or may refer to a processor and software model or algorithm that have been initialized to perform some or all of the Al antenna design process. In some embodiments, a single Al instance may perform all of the antenna design, while in other cases, different Al instances may cooperate to perform different parts of the design process (e.g., accessing antenna elements from prior antenna designs, designing a new antenna, testing a new antenna, or optimizing an antenna, etc.). Each Al instance may be subject to controls or parameters provided by a user or by a controlling software application.

In the embodiments herein, "complying with parameters" may include adhering to, meeting, working within, or otherwise acknowledging and striving to fit the newly designed antenna to those parameters or specifications. In at least some antenna designs, the Al-assisted antenna design module 101 may make tradeoffs to improve some parameters while potentially negatively affecting other parameters. The Al-assisted antenna design module 101 may thus note the minimum or maximum allowable values for a given antenna design, and may design the resulting antenna (e.g., 106) to be within the acceptable ranges for each of the parameters given in the design specifications 103. This may lead to a wide variety of different antenna designs that may potentially meet (all or some portion of) the given parameters.

For instance, in one embodiment, the Al-assisted antenna design module 101 may access a specific set of antenna elements. This set of elements may have been taken from another antenna, or may have been generated by the Al-assisted antenna design module 101. Based on a set of design parameters or design specifications 103, a single set of antenna elements may be arranged into many different antenna types or different antenna optimizations within a given antenna type.

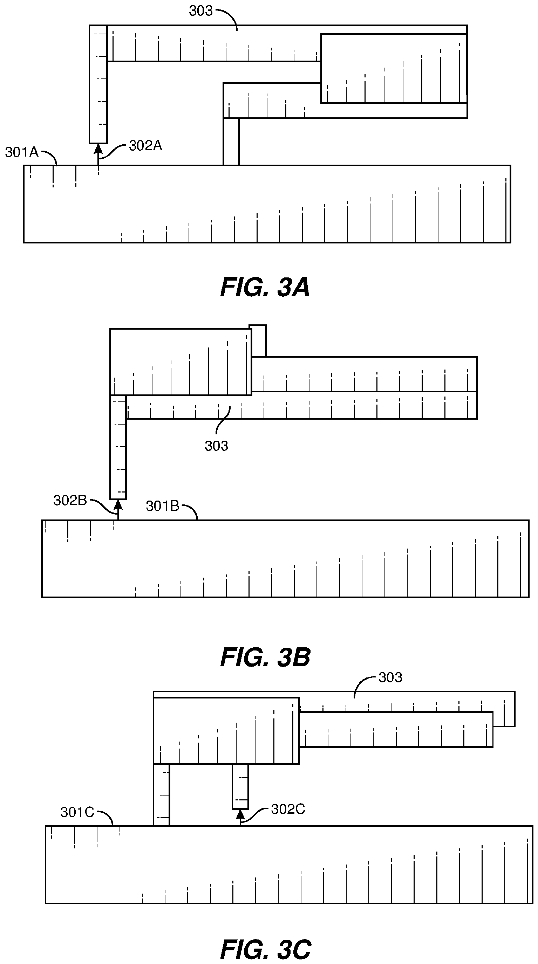

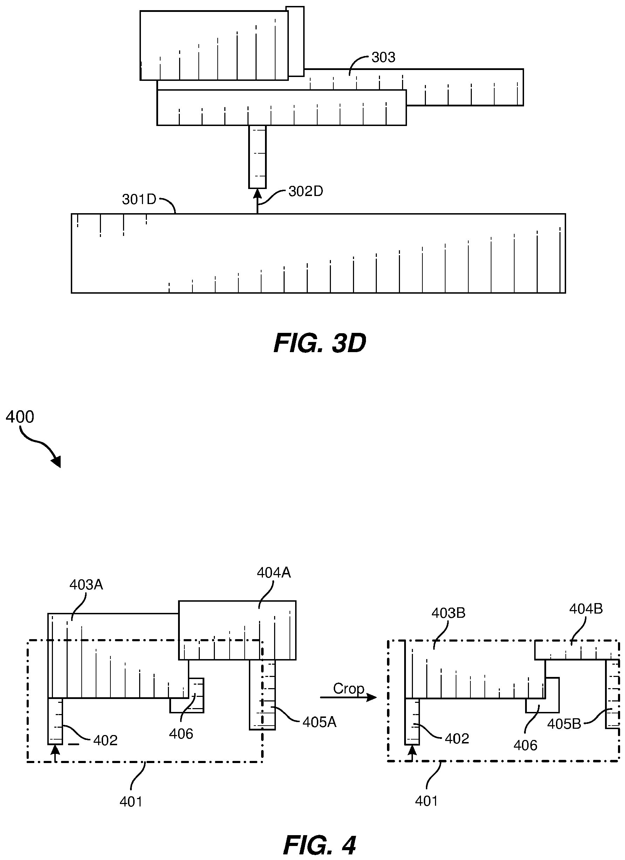

For instance, as shown in FIGS. 3A-3D, the same set of antenna elements 303 may be arranged into four (or more) different types of antennas. In FIG. 3A, the antenna elements 303 are arranged into a loop antenna 301A, with a feed at point 302A. In FIG. 3B, the same antenna elements 303 may be arranged into an inverted-L antenna 301B, with a feed at point 302B, while in FIG. 3C, the antenna elements 303 may be arranged into an inverted-F antenna 301C with a feed at point 302C. Still further, in FIG. 3D, the same antenna elements 303 may be arranged into a monopole antenna 301D with a feed point at point 302D. Other antenna architectures or antenna types are also possible. Thus, it can be seen that a given subset of antenna elements may be arranged by the Al-assisted antenna design module 101 of FIG. 1 into many different types of antennas. Moreover, each of these antenna types may be refined, tuned, and/or optimized to better fit the design specifications of a particular antenna, as will be explained further below.

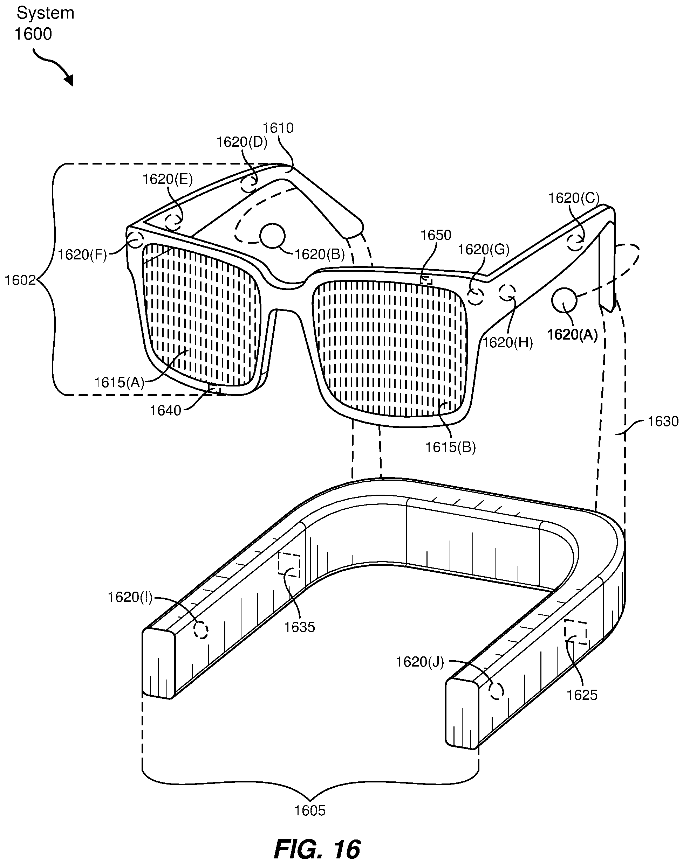

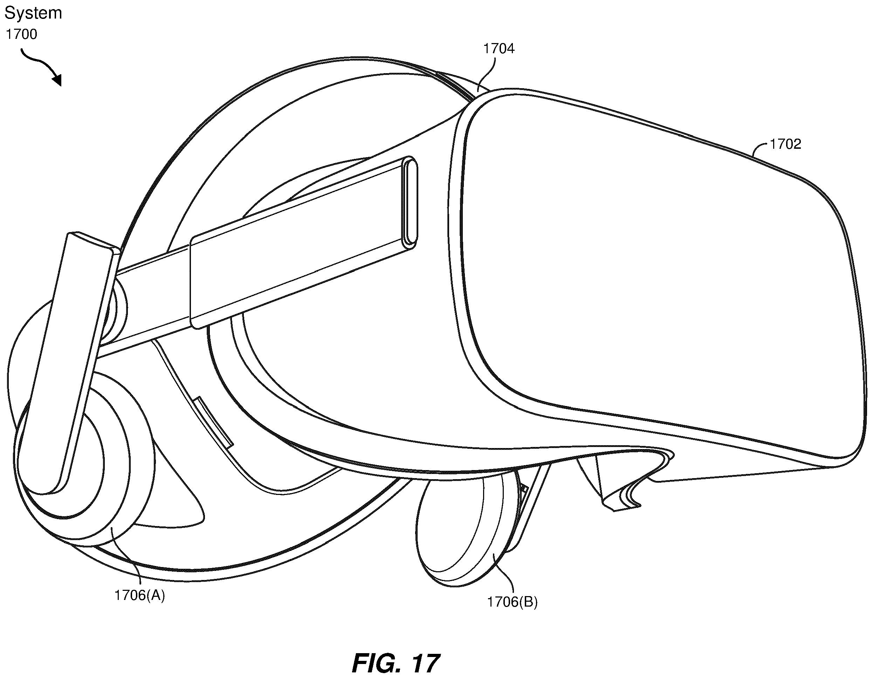

FIG. 4 illustrates an embodiment 400 in which a given set of antenna elements is altered to fit into a defined space. For instance, if the Al-assisted antenna design module 101 of FIG. 1 is implemented to design an antenna for a specific mobile device (e.g., a smartwatch, a smartphone, a wearable device, an augmented reality device (e.g., in FIG. 16), a virtual reality device (e.g., in FIG. 17), etc.) or for a specific internet of things (IoT) device, or for another device, the Al-assisted antenna design module 101 may access a set of antenna elements and may arrange those elements in substantially any manner. Some arrangements may not have any resonances, or may not fit within a given space, or may have other impediments that prevent the design from meeting specifications.

In FIG. 4, the Al-assisted antenna design module 101 may be provided with an arrangement of antenna elements that are to fit within the area or space 401. The antenna elements may include 402 (connected to the feed), 403A, 404A, 405A, and 406. In this embodiment, because one of the design parameters specifies that the set of antenna elements are to fit within the space 401 (e.g., the space available within a given mobile device), the Al-assisted antenna design module 101 may attempt to rearrange the antenna elements into a different antenna type or may change them into a smaller version of the existing type. In this case, the Al-assisted antenna design module 101 may attempt to crop portions of the antenna elements 403A, 404A, and 405A, resulting in cropped versions 403B, 404B, and 405B. In this embodiment, the antenna elements 401-406 may not change positions within the space 401, but may be reduced in size to fit the device's space constraints. Such cropping may be one way of ensuring that the design parameters for this antenna are met. Subsequent tests or simulations may be performed to ensure that the cropped version of the antenna still operates within minimum operating parameters (e.g., gain, efficiency, EIRP, etc.).

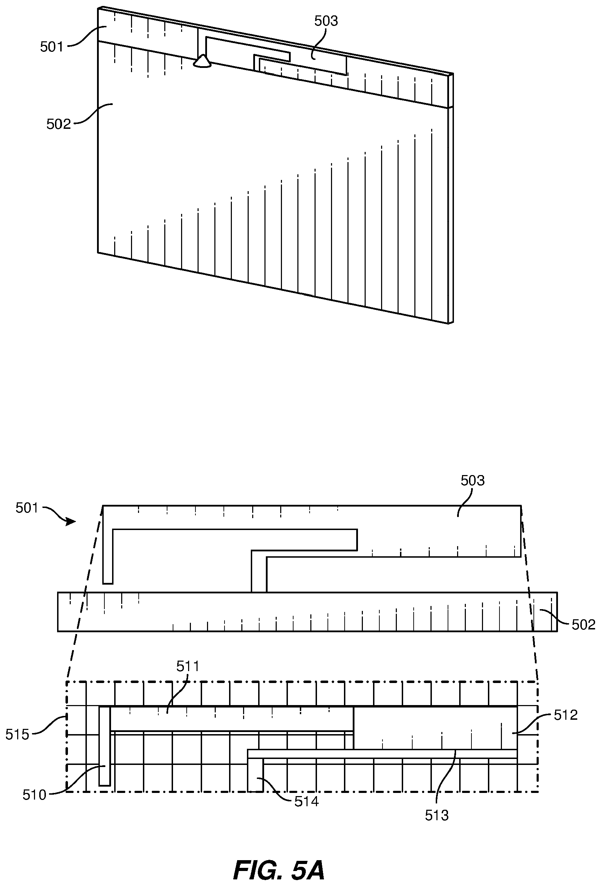

FIG. 5A illustrates an embodiment in which an existing antenna design is decomposed and divided into antenna elements. In FIG. 5A, a printed circuit board (PCB) or other substrate 501 may form a base 502 for the antenna 503. The base 502 may be part of a mobile electronic device, and may provide structural support for the antenna, or in some cases, may form part of the antenna 503. As can be seen in the top portion of FIG. 5A, and in the zoomed-in lower portion of FIG. 5A, the antenna 503 may include different antenna elements. In at least some embodiments, an Al instance may be used to decompose the antenna 503 into different antenna elements. In some cases, the Al may apply a grid 515 over the antenna 503 and may use the grid to divide the antenna into different sections (e.g., 510, which may connect to the antenna feed), 511, 512, 513, and 514. Each of these elements may be of a different height and/or width, and each may be connected to the other elements in a conductive manner.

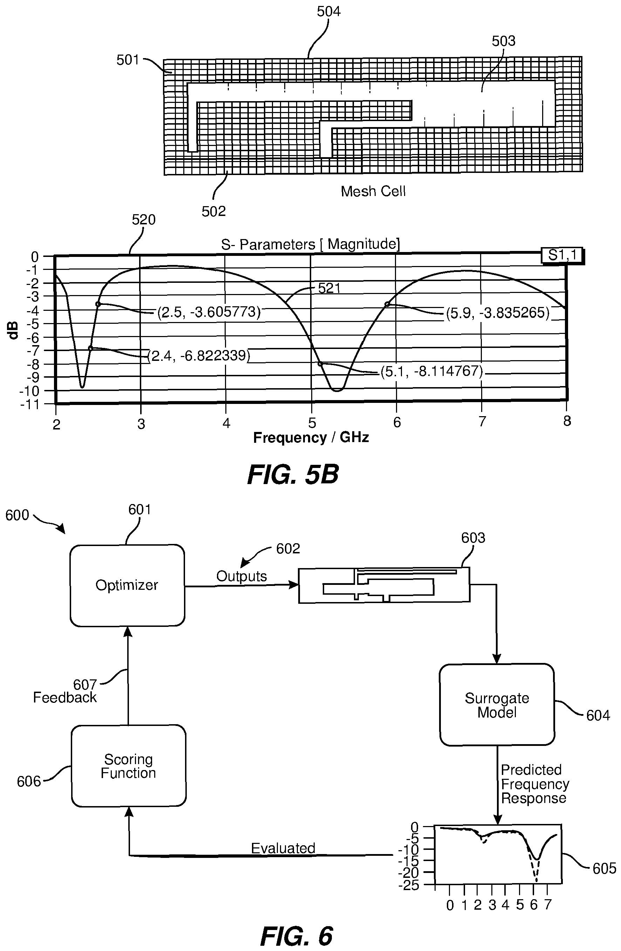

In some cases, as shown in FIG. 5B, the grid 504 may be of a finer pitch and may include more mesh cells. These mesh cells may be superimposed over the antenna 503 to determine the height and width of each antenna element. Finer grained meshes may produce more accurate element sizes. Once the sizes, shapes, and layouts of the antenna elements have been determined, the systems described herein may run a full simulation, or a shortened simulation (as will be explained further below) to determine how the antenna 503 may operate. One such example is provided in chart 520, where an S1,1 parameter is shown in 521, indicating that the antenna has two resonances at approximately 2.3GHz and 5.3GHz. This information may be implemented to determine whether to tune and/or optimize the antenna, or to just keep the decomposed antenna elements 510-514 and potentially implement those elements in a different antenna.

FIG. 6 illustrates an embodiment of an antenna optimization system 600 that may be used to evaluate and/or optimize newly created (or previously designed) antennas. The optimizer module 601 may include hardware and/or software configured to analyze a specific antenna design and determine how that design may be improved. As noted above, the embodiments herein may generate a new antenna using Al techniques by disassembling one or more existing antenna structures into multiple different antenna elements and then using Al to arrange the placement of those antenna elements within a specified antenna space to form the desired antenna type(s). These systems may render antenna designs based on user-provided specifications, and may generate the antennas using no or minimal domain knowledge. The antenna area or space within which the antennas are designed may be a 2D planar space, a 2.5D space, or a 3D space with multiple levels in the x, y, or z directions. The antenna generation process may consider multiple objectives or design specifications when generating the antennas (e.g., S parameters, gain, efficiency, etc.), and may provide users with multiple suitable antenna types and/or architectures. Once an antenna has been designed and selected for potential use, the performance characteristics of that antenna may be optimized using the optimizer module 601.

At least in some cases, Al techniques may be implemented to improve the performance of a given antenna by optimizing its geometric parameters. The optimizer module 601 may determine, based on domain knowledge that itself may include techniques for improving S parameters, gain, efficiency, EIRP, or other parameters, how a given antenna is to be improved. The optimizer may make changes to the subject antenna's various element, including changing the elements' positions, sizes, shapes, connection points, grounding points, feed insertion points, parasitic elements, or other characteristics. The updated antenna 603 may be provided as an output 602 to a surrogate model 604. A "surrogate model," as the term is used herein, may refer to a software and/or hardware module configured to perform rapid performance tests on candidate antenna designs. The surrogate model 604 may perform rough or approximated simulations based on existing domain knowledge indicating how other similar antenna designs have operated. These rough simulations may be much less time- and CPU-intensive than full simulations, and may provide a general sense for how the updated antenna 603 will perform without incurring the time and cost of a full simulation.

The surrogate model 604 may, for example, predict frequency response 605 for the updated antenna 603. This frequency response 605 may indicate which frequency bands the antenna may be suitable to operate in, or may indicate antenna efficiencies at different frequencies. Each antenna design evaluated by the surrogate model 604 may be assigned a score (606) and that score may be provided to the optimizer module 601 as feedback 607. The optimizer may then take that score and either indicate that the performance metrics have been met, or may indicate that further optimization may be beneficial, or may indicate that the design has failed to meet design specifications (or is unlikely to meet design specifications) and that the antenna may be discarded or tagged for use in a different application or device.

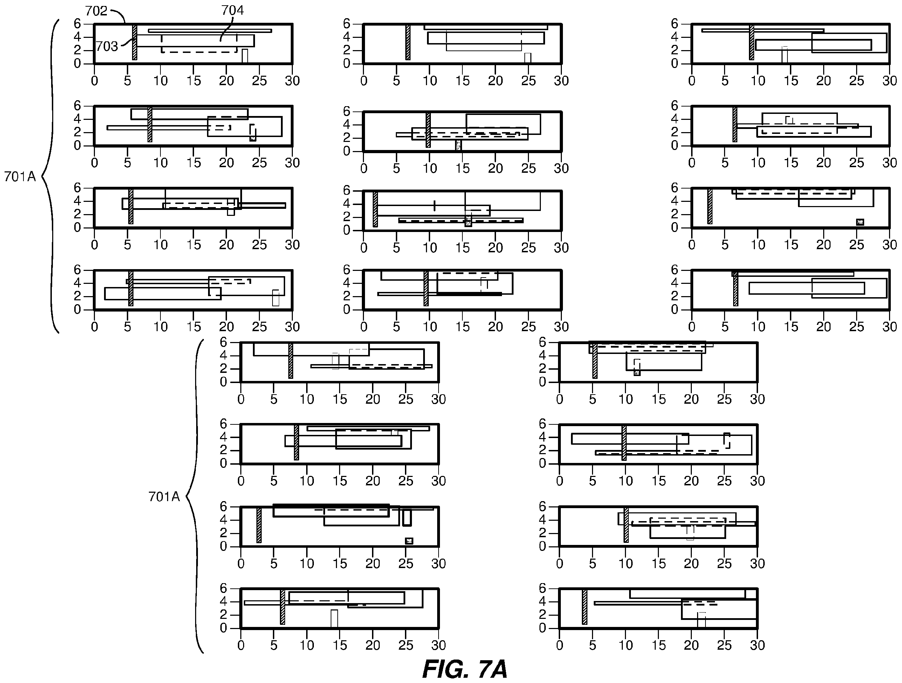

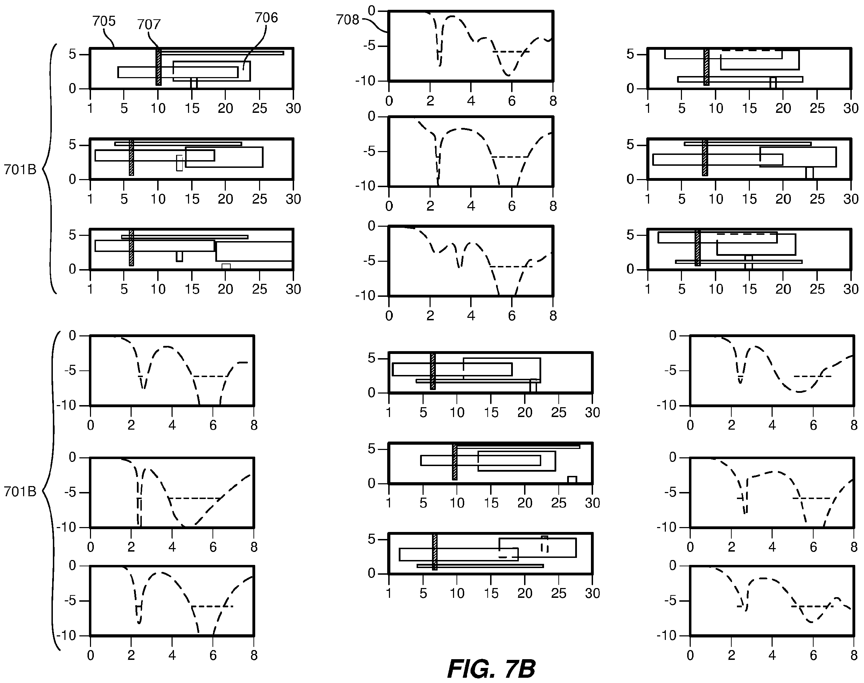

As shown in FIGS. 7A and 7B, the systems described herein may, using Al techniques, design many hundreds or thousands (or more) of different antennas, each of which may be more suited or less suited to a given application or device. Certain designs may be selected for further optimization using the surrogate model 604 of FIG. 6. In one embodiment, the Al-assisted antenna design module 101 of FIG. 1 may design the antennas of group 701A. Each antenna (e.g., 702) may include an antenna feed 703 and various antenna elements 704. The variation in antenna designs may be illustrated, in a small measure, in the group of antennas 701A. Each of these antennas may be designed using Al techniques, and each may be closer to or further from the intended design specifications.

FIG. 7B illustrates a group of antennas 701B that also includes associated simulation results (or at least abbreviated simulations results from a surrogate model). Thus, for example, antenna 705 in group of antennas 701B may include an antenna feed 707 and multiple antenna elements 706. Antenna 705 may also have an accompanying frequency response chart 708 indicating the simulated frequency response for that antenna. These frequency response charts may indicate whether the designed antenna is close to meeting the specified design characteristics, and may also indicate whether the design is worthy of further optimization using the antenna optimization system 600 of FIG. 6.

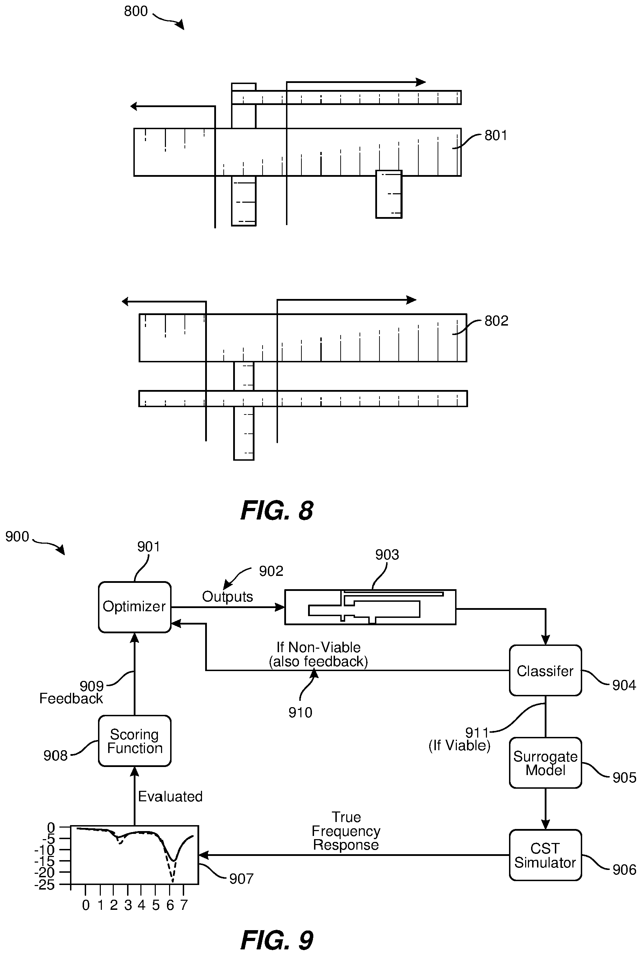

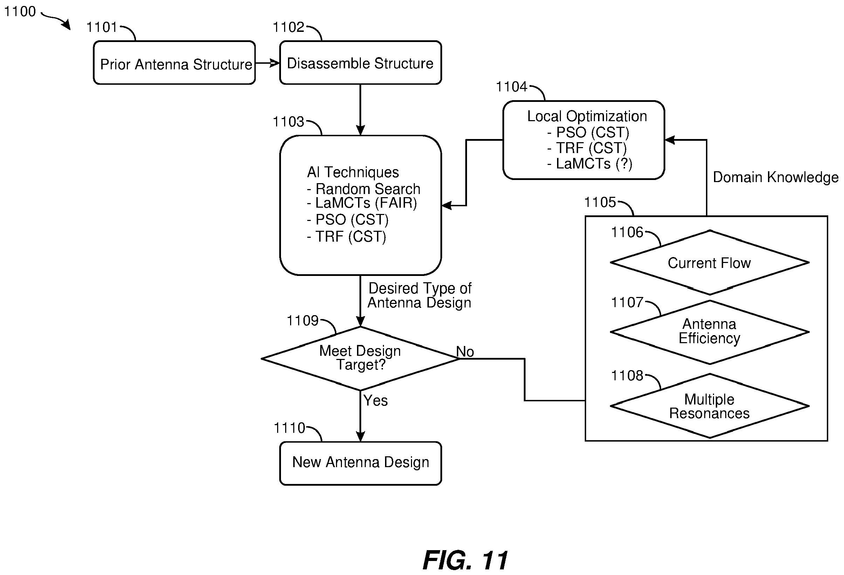

FIG. 8 illustrates a zoomed-in view 800 of two different antenna designs or architectures that may be generated using Al techniques. The first antenna architecture, 801, may include multiple different antenna elements that are arranged in different positions and patterns from those elements in antenna architecture 802. Both antennas may be designed to operate within the 2.4-2.5GHz range and the 5.1-7GHz range, but each may include different S-parameter, gain, efficiency, or other characteristics that may lead one antenna to be selected over the other. In some examples, either or both of the antennas 801 and 802 may subjected to optimization and redesign. The optimization process may determine that some antenna elements are to be repositioned or resized or removed entirely. These changes may be made in light of key performance indicators or design specifications that apply to the antennas 801/802. Each change may bring the antennas closer to these design specifications and, ultimately, implementation in a mobile electronic device. This optimization process will be described further below with regard to FIGS. 11-15.

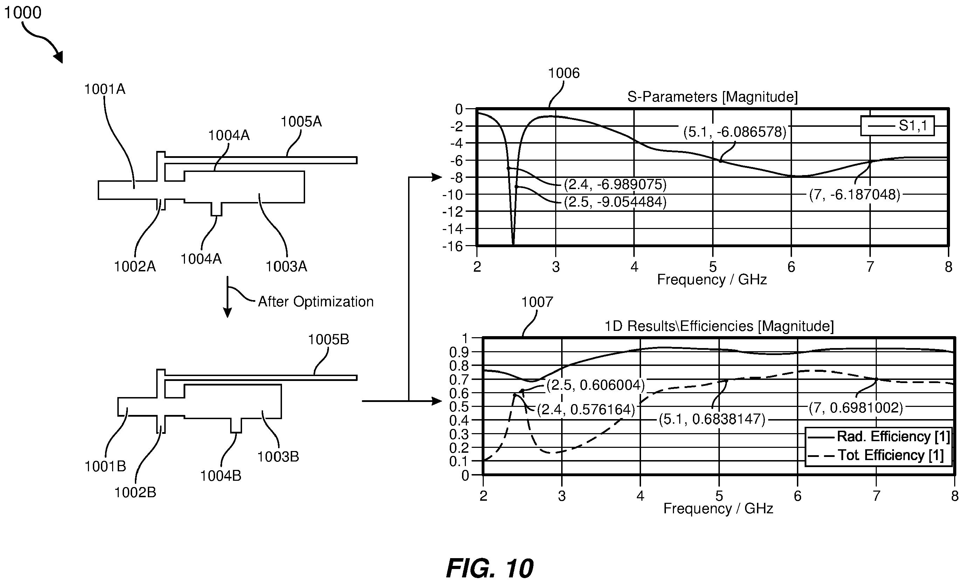

FIG. 9 and 10 illustrate embodiments 900 and 1000, respectively, that may be similar to FIGS. 6-8 above. In FIGS. 9 and 10, alternate systems for Al antenna design and resulting (optimized) antennas may be provided. The Al antenna design system 900 of FIG. 9 includes an optimizer module 901. The optimizer module 901 may be configured to receive or access various designed antennas. The optimizer module 901 may use different Al learning algorithms to identify improvements to the accessed antenna designs. These improvements may come through alterations to antenna element placements, antenna element sizes or shapes, placement of antenna grounds, placement of antenna feed insertion points, placement of parasitic elements, changes to antenna feed components (e.g., size, placement, number or type of components, etc.), or other changes. These optimizer outputs 902 may include new antenna designs 903 or changes to existing designs.

The classifier module 904 may be configured to determine whether the new antenna designs 903 received from the optimizer 901 are viable. As the term is used herein, a "viable" antenna may refer to an antenna that may function for its intended purpose and within (at least some or all of) its design specifications. Thus, for example, if an antenna is to function within a 2.4GHz-2.5GHz range, and the antenna only operates at 3.5GHz, that antenna is not viable for those design specifications. Or, if the antenna has no resonances at all, or consumes too much power, or is too highly direction, or includes some other disqualifying characteristics taking the antenna beyond its design specification maximums, that antenna may be deemed non-viable (910) and may be provided as feedback to the optimizer. The optimizer 901 may then use that feedback as background knowledge when performing subsequent antenna design optimizations.

If, however, the classifier module 904 determines that the newly designed antenna 903 is viable (at 911), the classifier module may pass the antenna design to a surrogate model 905. If a low-cost, time-efficient simulation is to be performed, that simulation will be performed by the surrogate model 905 and the resulting frequency response 907 (or other analysis) will be provided to the scoring module 908 which will apply a score to the antenna indicating how well the antenna conformed to its design specifications, and that score may be provided to the optimizer module 901 as feedback 909 for use in subsequent design optimizations. Additionally or alternatively, if the antenna design 903 is viable (at 911), the systems herein may opt to perform a full simulation. In such cases, the computer simulation technology (CST) simulator 906 may perform a full operational analysis on the antenna to determine its operating characteristics (including any of the operating characteristics mentioned above). This full simulation may take longer, but may be more precise and may provide more accurate performance data regarding the antenna design. This full simulation may also be given a score and provided as feedback to the optimizer 901.

FIG. 10 illustrates potential optimizations that may be made by the optimizer module 901 of FIG. 9. For instance, in FIG. 10, the top antenna 1005A has a specified layout with antenna components having specific dimensions. And, the bottom antenna 1005B similarly has a specific layout with antenna components having specified dimensions. The top antenna 1005A may represent a newly designed antenna, while the bottom antenna 1005B may represent an optimized antenna. In this example, the antenna element 1001B has been modified, such that after optimization, it is now shorter than antenna element 1001A. Similarly, antenna element 1002B may be modified to be longer than the corresponding antenna element 1002A, and the antenna element 1003B may be modified to be shorter than antenna element 1003A. In some cases, the positioning of elements may also change. As can be seen in FIG. 10, the placement of antenna element 1004B has been changed relative to the placement of 1004A in antenna 1005A. Accordingly, the optimization process may change many different things about the antenna, including antenna element placement, size, shape, or other characteristics. As indicated in the corresponding frequency response charts 1006 and 1007, the frequency response or other antenna characteristics may be altered by making seemingly small changes to antenna elements and/or antenna architecture.

In some embodiments, the systems herein may perform antenna design with or without prior knowledge of other antenna architectures. Similarly, the systems herein may perform antenna design optimization with or without prior knowledge of other antenna architectures. As noted above, many existing mobile electronic devices have implemented wireless antennas for communication over many different frequency bands and using different types of radios. For instance, mobile devices have implemented cellular antennas (e.g., long-term evolution LTE, 3G, 4G, 5G, etc.), Bluetooth antennas, WiFi antennas, global positioning system (GPS) antennas, ultrawideband antennas, near-field communication (NFC) antennas, AM/FM radio antennas, and other types of antennas. In some cases, the Al design and/or optimization systems described herein may consult databases that store large numbers of such previous antenna designs when designing or optimizing new antennas. In such cases, the previous antenna designs (and potentially their corresponding frequency response (or other) outputs) may be used as background knowledge when determining how to design antennas within certain design specifications, when assembling antenna elements into an assembled antenna, or when determining how to optimize certain performance characteristics of a newly designed antenna.

In other case, the Al systems or Al instances described herein may assemble antenna elements into assembled antennas or may optimize the performance of resulting antennas without knowledge of other antenna architectures. Thus, in such cases, an Al instance may access and assemble antenna elements in various designs until a design has been found that meets some or all of the designated performance characteristics or design specifications. Performing antenna design and/or antenna optimization without consulting prior designs may result in novel architectures that have not been previously considered, and may lead to antenna performance increases that have yet been unachieved in older designs.

In cases where Al instances use prior antennas as background knowledge for antenna design and optimization as well as in cases where Al instances do not use prior antennas as background knowledge, the Al instances may use antenna elements taken from prior antennas. These antenna elements may be stored in a database of antenna elements. These may be antenna elements from all types, sizes, and shapes of antennas, including single antennas and antenna arrays. The antenna elements may be the result of decomposing different antenna architectures into various antenna elements. In some cases, the Al instances may be used to decompose prior antennas, dividing those antennas into different shapes and configurations. In other cases, the Al instances may alter these decomposed antenna elements by changing their size, shape, or other characteristics. In still other cases, the Al instances may be used to create new antenna elements and new antenna designs from those new elements.

In one example, a single antenna architecture may be decomposed into multiple different antenna elements (e.g., as shown in FIG. 5A). These same antenna elements may then be assembled into multiple different assembled antennas (e.g., as shown in FIGS. 3A-3D). These newly assembled antennas may be of the same type or architecture as the decomposed antenna, or may be assembled into different antenna types. Thus, the Al antenna design instances described herein may be implemented to analyze previous antenna designs, decompose those designs into usable antenna elements, combine those antenna elements (and potentially others) into new antenna designs, and optimize those new antenna designs for a given application or device.

In some cases, users or software applications may provide design parameters or specifications within which the Al antenna design instances are to design a new antenna. In some embodiments, those design parameters may specify a layout size constraint for the newly assembled antenna. The layout size constraint may indicate an area or volume in which the antenna is to be designed. The area or volume may be a minimum amount or a maximum amount. With such a constraint, the Al antenna design instance may know how large the antenna it is attempting to design may be. Other design parameters may specify various minimum performance characteristics for the assembled antenna, including gain, directionality, S parameter values, EIRP, frequency response, or other antenna performance characteristics. Other performance characteristics may be added, removed, or changed by a user to guide the Al antenna design instance in its design process.

Design parameters may also indicate or limit the locations in which the antenna elements may be placed within an electronic device. For instance, some antenna elements may not be placed too close to certain components such as batteries, printed circuit boards, other antennas, electromagnetic shields, or other components. In such cases, the design parameters may specify which components the antenna elements can or cannot be placed near. Allowable distances between antenna elements and other device components may also be specified. Still further, the design parameters may limit the width and/or height for specific antenna elements and/or for the assembled antenna as a whole. In some cases, certain antenna elements may need to have a minimum width, or a minimum height, or may need to be placed in a certain position within the mobile device. In such cases, the design parameters may indicate the length, width, height, placement, or other characteristics for each antenna element and/or for the assembled antenna as a whole.

FIG. 11 illustrates an alternative Al antenna design and optimization system that may perform a method flow 1100. This method flow 1100 may initially include accessing one or more prior antenna structures 1101. These prior antenna structures 1101 may be taken from any type of existing antenna or antenna array. At step 1102, the Al antenna design and optimization system may disassemble these antenna structures into component parts or antenna elements. These antenna elements may then be arranged into operational (or at least viable) antennas using different Al techniques 1103 including performing random searches, Latent Action Monte Carlo Tree Searches (LaMCTs), Particle Swarm Operations (PSOs), Tuned Random Features (TRFs), or other Al learning techniques.

In some embodiments, neural networks, machine learning, or other techniques may additionally or alternatively be implemented. Such implementations are generally described further below. For instance, at least some of the embodiments described herein may train and/or implement Al techniques, neural networks, or machine learning models to access prior antenna structures (1101), disassemble those structures (1102), design an antenna, determine whether that design meets one or more target parameters (1109), if yes, submit the new antenna design 1110, and if no, then perform optimizations using domain knowledge 1105 (e.g., electrical current flow 1106, determined antenna efficiencies 1107, determined resonances 1108 for those antennas, etc.) and/or local optimizations 1104 using PSOs, TRFs, LaMCTs, or other learning techniques.

The systems herein may implement and/or incorporate a machine learning module that includes various ML-related components. These components may include a machine learning (ML) processor, an inferential model, a feedback implementation module, a prediction module, and/or a neural network. Each of these components may be configured to perform different functions with respect to training and/or implementing a machine learning model. The ML processor, for example, may be a dedicated, special-purpose processor with logic and circuitry designed to perform machine learning. The ML processor may work in tandem with the feedback implementation module to access data and use feedback to train an ML model. For instance, the ML processor may access one or more different training data sets. The ML processor and/or the feedback implementation module may use these training data sets to iterate through positive and negative samples and improve the ML model over time.

In some cases, the machine learning module may include an inferential model. As used herein, the term "inferential model" may refer to purely statistical models, purely machine learning models, or any combination of statistical and machine learning models. Such inferential models may include neural networks such as recurrent neural networks. In some embodiments, the recurrent neural network may be a long short-term memory (LSTM) neural network. Such recurrent neural networks are not limited to LSTM neural networks and may have any other suitable architecture. For example, in some embodiments, the neural network may be a fully recurrent neural network, a gated recurrent neural network, a recursive neural network, a Hopfield neural network, an associative memory neural network, an Elman neural network, a Jordan neural network, an echo state neural network, a second order recurrent neural network, and/or any other suitable type of recurrent neural network. In other embodiments, neural networks that are not recurrent neural networks may be used. For example, deep neural networks, convolutional neural networks, and/or feedforward neural networks, may be used. In some implementations, the inferential model may be an unsupervised machine learning model, e.g., where previous data (on which the inferential model was previously trained) is not required.

At least some of the embodiments described herein may include training a neural network to identify data dependencies, identify which information from various data sources is to be altered to lead to a desired outcome, or how to alter the information to lead to a desired outcome. In some embodiments, the systems described herein may include a neural network that is trained to identify how information is to be altered using different types of data and associated data dependencies. For example, the embodiments herein may use a feedforward neural network. In some embodiments, some or all of the neural network training may happen offline. Additionally or alternatively, some of the training may happen online. In some examples, offline development may include feature and model development, training, and/or test and evaluation.

In one embodiment, a repository that includes data about past data accessed and past data alterations may supply the training and/or testing data. In one example, when the underlying system had accessed different types of data from different data sources, the system may determine which alterations to identify based on data from a feature repository and/or an online recommendation model that may be informed by the results of offline development. In one embodiment, the output of the machine learning model may include a collection of vectors of floats, where each vector represents a data source and each float within the vector represents the probability that a specified data alteration will be identified. In some embodiments, the recent history of a data source may be weighted higher than older history data. For example, if a data source had repeatedly provided relevant data that resulted in relevant operational steps, the ML model may determine that the probability of that data source providing relevant data in the future is higher than for other data sources.

Once the machine learning model has been trained, the ML model may be used to identify which data is to be altered (e.g., antenna element characteristics and placement) and how that data is to be altered based on multiple different data sets. In some embodiments, the machine learning model that makes these determinations may be hosted on different cloud-based distributed processors (e.g., ML processors) configured to perform the identification in real time or substantially in real time. Such cloud-based distributed processors may be dynamically added, in real time, to the process of identifying data alterations. These cloud-based distributed processors may work in tandem with the prediction module to generate outcome predictions, according to the various data inputs. These predictions may identify potential outcomes that would result from the identified data alterations. The predictions output by the prediction module may include associated probabilities of occurrence for each prediction. The prediction module may be part of a trained machine learning model that may be implemented using the ML processor. In some embodiments, various components of the machine learning module may test the accuracy of the trained machine learning model using, for example, proportion estimation. This proportion estimation may result in feedback that, in turn, may be used by the feedback implementation module in a feedback loop to improve the ML model and train the model with greater accuracy.

Accordingly, the Al techniques 1103 of FIG. 11 and the local optimizations 1104 performed in the method flow 1100 may include search algorithms, machine learning algorithms, neural networks, or other forms of artificial intelligence. In some cases, once a new antenna has been designed, if that antenna does not meet target specifications (e.g., at 1109), local optimizations may be performed (either with or without domain knowledge 1105) in order to bring the antenna design within the target specifications. In some cases, the local optimizations may be performed to optimize or improve a specific operational characteristic of the antenna (e.g., a characteristic that is not meeting target specifications (e.g., gain)). The Al instances may then optimize the antenna specifically for (or with a direct focus on) that characteristic. Thus, in some cases, the Al instances may themselves determine (or may access an indication of) which operational characteristics are the most significant or most important and then optimize the antenna for at least one of those characteristics. In some cases, the Al instances may use various models or methods to determine which portion of a new antenna design is the most important b/o domain knowledge or based on which portion is failing to meet target specifications, and then optimize the antenna by focusing on that element.

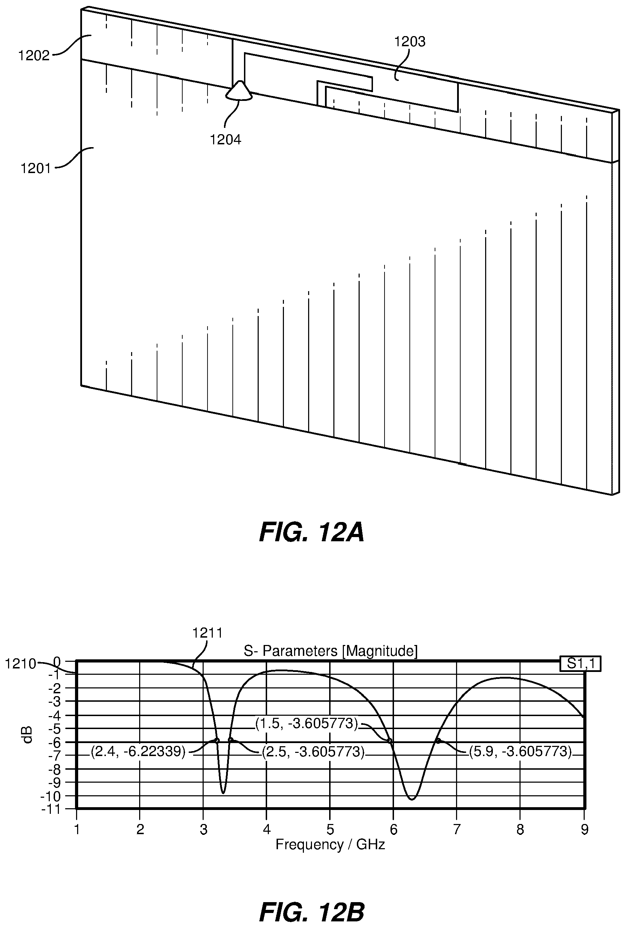

In some cases, a surrogate model may be implemented to simulate or test the newly designed and/or optimized antennas. As noted above, a surrogate model may be implemented to perform a quick, low-CPU-cost simulation of a candidate antenna design that is much faster than a full antenna performance simulation. The surrogate model may analyze the optimized antenna to identify various operational characteristics of the antenna. One example of this is shown in FIGS. 12A and 12B. The method flow of FIG. 11 may result in a new, optimized antenna design. This antenna design may look like the antenna 1201 of FIG. 12A. The antenna 1201 may include various antenna elements 1203 applied to a substrate backing 1202. The antenna elements may be electrically connected to an antenna feed 1204. A surrogate model may be implemented to analyze the antenna 1201, resulting in the example results chart 1210. The results chart 1210 may indicate two resonances at approximately 3.3GHz and 5.3 GHz. The S11 parameters may indicate an acceptable return loss that is within design specifications for this antenna. If other, less positive results were returned from the surrogate model, the optimization process may be repeatedly performed until design specifications are met.

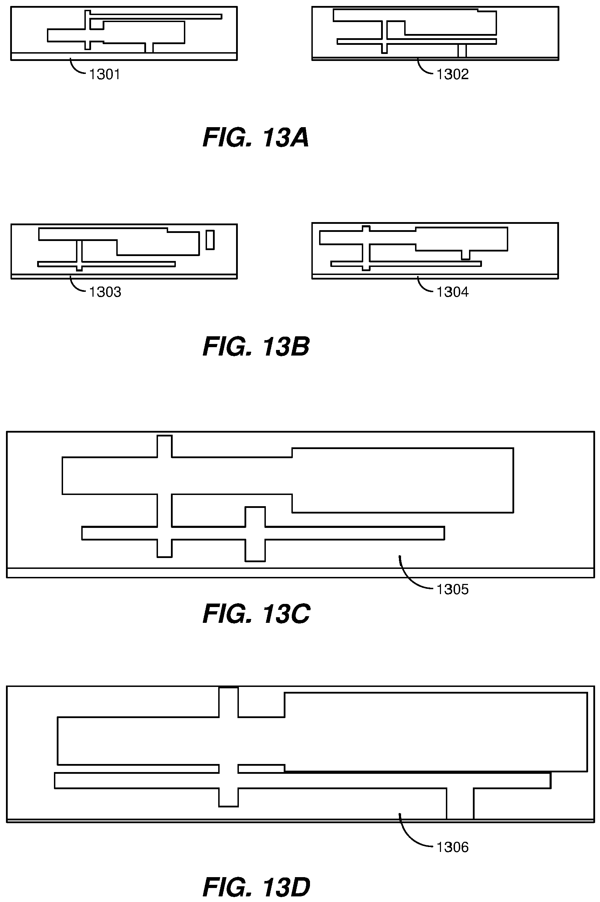

FIGS. 13A-13D illustrate example implementations in which different Al techniques are used to generate antenna designs. In FIG. 13A, for example, an Al instance may have used random search techniques when combining or assembling the various antenna elements. This may result in two different antenna designs, 1301 and 1302. Each of these antennas has a different shape and design. Similarly, antennas 1303 and 1304 of FIG. 13B may have been generated using LaMCTs, while antenna 1305 of FIG. 13C may have been generated using PSO. Antenna 1306 of FIG. 13D may have been generated using TRF. Thus, as can be seen, different Al techniques may result in different antenna designs, even in potential cases where the same antenna elements are used as the foundation for the design.

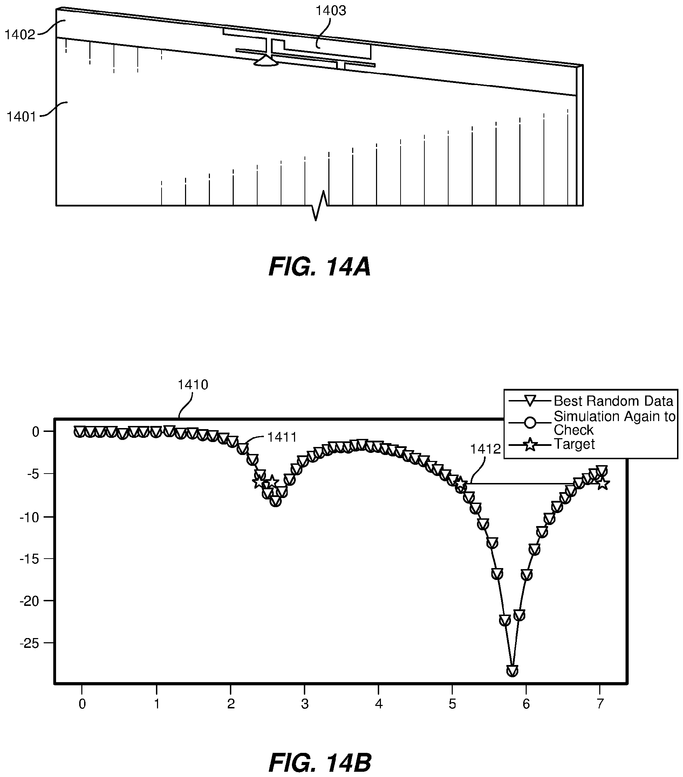

In some cases, these antenna designs 1301-1306 may be subject to simulation and optimization. In cases where a quick simulation is to be performed, a surrogate model may be used. The surrogate model may take the new antenna design as input and may determine one or more characteristics of the antenna. For instance, as shown in FIGS. 14A and 14B, an antenna 1401, having elements 1403 applied to a substrate 1402, may be evaluated for frequency response. This frequency response may be represented in chart 1410 of FIG. 14B. The frequency response 1411 may indicate a target value at 1412. If the target value is met, the design may be finalized or subjected to further optimization. If the target value is not met, the surrogate model may filter out that design and discard it.

Indeed, in some cases, the surrogate model may be implemented to perform quick analyses on Al-generated antenna designs. If those designs lack any resonances, or have poor gain values or poor directionality, or have other suboptimal characteristics, the surrogate model may filter those antenna designs out such that they are no longer part of the creation/optimization process. In some embodiments, the surrogate model may implement a knowledge database of prior antennas and their associated characteristics when determining which assembled antennas to filter out. This database knowledge may help the surrogate model to function even more quickly, easily identifying antenna designs that are nonfunctional or impractical, and quickly discarding them to focus on more promising designs. In some embodiments, this database knowledge may include full antenna simulations, which may be more reliable indicators of potential performance. Filtering out unusable candidates may avoid abbreviated simulations in the surrogate model and may avoid full simulations in a simulation model. This filtering may provide large time and cost savings.

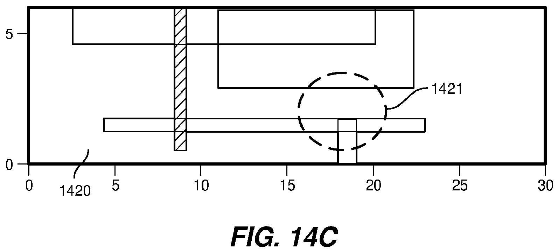

In some embodiments, as shown in FIG. 14C, the Al instances may identify which components of an antenna design are properly designed or properly placed, and which components are not. Such components may be identified visually (e.g., 1421 in design 1420), or may simply be noted by the Al instance. These antenna components may include not only conductive elements, as noted above, but may also include antenna feed insertion points, grounding points, antenna feed components, or, in some cases, parasitic elements.

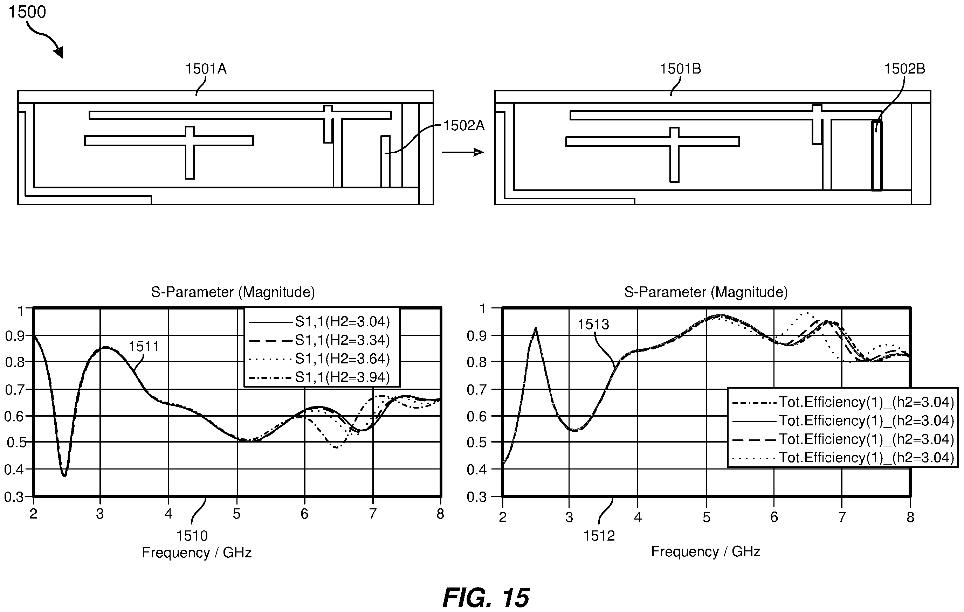

FIG. 15 illustrates an embodiment 1500 of an antenna design in which a parasitic element may be altered to change the functionality of the antenna. A parasitic element may be a conductive portion of an antenna that may directly or indirectly radiate with the antenna. In FIG. 15, the parasitic element 1502A may be part of antenna 1501A. As can be seen in FIG. 15B, the parasitic element 1502B may be longer and may be directly connected to the antenna 1501B. This may change the performance characteristics of the antenna. Chart 1510 illustrates an S parameter measurement 1511 for antenna 1501A, while chart 1512 illustrates an S parameter measurement 1513 for antenna 1501B. The S parameter measurements are vastly different from each other, even though the base antenna design has not changed. Merely by changing the parasitic element 1502A/1502B, the performance of the antenna may be greatly modified. As such, changes to parasitic elements may be implemented by Al instances when creating and/or optimizing new antenna designs.

In addition to the methods for designing and optimizing antennas described herein, corresponding systems and computer-readable media may also be provided. In one embodiment, a system may be provided that includes at least one physical processor and physical memory comprising computer-executable instructions that, when executed by the physical processor, cause the physical processor to: access one or more antenna elements, identify one or more parameters for an antenna that is to be formed using the accessed antenna elements, and assemble the antenna elements, using an artificial intelligence (Al) instance, into an assembled antenna that at least partially complies with the identified parameters.

Similarly, a non-transitory computer-readable medium may be provided having one or more computer-executable instructions that, when executed by at least one processor of a computing device, cause the computing device to: access one or more antenna elements, identify one or more parameters for an antenna that is to be formed using the accessed antenna elements, and assemble the antenna elements, using an artificial intelligence (Al) instance, into an assembled antenna that at least partially complies with the identified parameters.

Any of these systems, methods, and computer-readable media may be implemented to design and optimize different types of antennas. These antennas may then be used in all types of mobile or stationary electronic devices. Al techniques may be implemented to design these antennas, leading to more efficient antennas and more specialized antennas that are potentially more suited to each individual application or device. Still further, continued optimizations may further refine the newly created antennas, and may continue to improve and optimize the design of each antenna.

### Example Embodiments

Example 1: A computer-implemented method may include accessing one or more antenna elements, identifying one or more parameters for an antenna that is to be formed using the accessed antenna elements, and assembling the antenna elements, using an artificial intelligence (Al) instance, into an assembled antenna that at least partially complies with the identified parameters.

Example 2: The computer-implemented method of Example 1, wherein the Al instance assembles the antenna elements into the assembled antenna without knowledge of other antenna architectures.

Example 3: The computer-implemented method of Example 1 or Example 2, further comprising accessing one or more antenna architectures and, wherein the Al instance uses the accessed antenna architectures as background knowledge when assembling the antenna elements into the assembled antenna.

Example4:The computer-implemented method of any of Examples 1-3, further comprising decomposing one or more antenna architectures to identify the one or more antenna elements.

Example 5: The computer-implemented method of any of Examples 1-4, wherein a same antenna architecture is decomposed into a plurality of different antenna elements.

Example 6: The computer-implemented method of any of Examples 1-5, wherein a same set of antenna elements are assembled into a plurality of different assembled antennas.

Example 7: The computer-implemented method of any of Examples 1-6, wherein the plurality of different assembled antennas are of one or more different antenna types.

Example 8: The computer-implemented method of any of Examples 1-7, wherein the parameters specify a layout size constraint for the assembled antenna.

Example 9: The computer-implemented method of any of Examples 1-8, wherein the parameters specify one or more minimum performance characteristics for the assembled antenna.

Example 10: The computer-implemented method of any of Examples 1-9, further comprising optimizing the assembled antenna to improve one or more operational characteristics.

Example 11: The computer-implemented method of any of Examples 1-10, wherein the Al instance accesses an indication of which operational characteristics are most significant and optimizes the assembled antenna for at least one of the indicated operational characteristics.

Example 12: A system may include at least one physical processor and physical memory comprising computer-executable instructions that, when executed by the physical processor, cause the physical processor to: access one or more antenna elements, identify one or more parameters for an antenna that is to be formed using the accessed antenna elements, and assemble the antenna elements, using an artificial intelligence (Al) instance, into an assembled antenna that at least partially complies with the identified parameters.

Example 13: The system of Example 12, wherein the identified parameters limit which locations one or more of the antenna elements is placeable within an electronic device.

Example 14: The system of Example 12 or Example 13, wherein the identified parameters limit a width and/or a height for at least one of the antenna elements and/or for the assembled antenna.

Example 15: The system of any of Examples 12-14, wherein the assembled antenna is analyzed by a surrogate model to identify one or more operational characteristics of the assembled antenna.

Example 16: The system of any of Examples 12-15, wherein the surrogate model filters one or more assembled antennas whose performance characteristics are below a minimum performance threshold value.

Example 17: The system of any of Examples 12-16, wherein the surrogate model implements a knowledge database when determining which assembled antennas to filter out.

Example 18: The system of any of Examples 12-17, wherein the assembled antenna is provided to a simulation model for a performance simulation.

Example 19: The system of any of Examples 12-18, wherein performance results from the simulation are provided to a surrogate model to inform future analyses by the surrogate model.

Example 20: A non-transitory computer-readable medium comprising one or more computer-executable instructions that, when executed by at least one processor of a computing device, cause the computing device to: access one or more antenna elements, identify one or more parameters for an antenna that is to be formed using the accessed antenna elements, and assemble the antenna elements, using an artificial intelligence (Al) instance, into an assembled antenna that at least partially complies with the identified parameters.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1600 in FIG. 16) or that visually immerses a user in an artificial reality (such as, e.g., virtual-reality system 1700 in FIG. 17). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 16, augmented-reality system 1600 may include an eyewear device 1602 with a frame 1610 configured to hold a left display device 1615(A) and a right display device 1615(B) in front of a user's eyes. Display devices 1615(A) and 1615(B) may act together or independently to present an image or series of images to a user. While augmented-reality system 1600 includes two displays, embodiments of this disclosure may be implemented in augmented-reality systems with a single NED or more than two NEDs.

In some embodiments, augmented-reality system 1600 may include one or more sensors, such as sensor 1640. Sensor 1640 may generate measurement signals in response to motion of augmented-reality system 1600 and may be located on substantially any portion of frame 1610. Sensor 1640 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1600 may or may not include sensor 1640 or may include more than one sensor. In embodiments in which sensor 1640 includes an IMU, the IMU may generate calibration data based on measurement signals from sensor 1640. Examples of sensor 1640 may include, without limitation, accelerometers, gyroscopes, magnetometers, other suitable types of sensors that detect motion, sensors used for error correction of the IMU, or some combination thereof.

In some examples, augmented-reality system 1600 may also include a microphone array with a plurality of acoustic transducers 1620(A)-1620(J), referred to collectively as acoustic transducers 1620. Acoustic transducers 1620 may represent transducers that detect air pressure variations induced by sound waves. Each acoustic transducer 1620 may be configured to detect sound and convert the detected sound into an electronic format (e.g., an analog or digital format). The microphone array in FIG. 16 may include, for example, ten acoustic transducers: 1620(A) and 1620(B), which may be designed to be placed inside a corresponding ear of the user, acoustic transducers 1620(C), 1620(D), 1620(E), 1620(F), 1620(G), and 1620(H), which may be positioned at various locations on frame 1610, and/or acoustic transducers 1620(I) and 1620(J), which may be positioned on a corresponding neckband 1605.

In some embodiments, one or more of acoustic transducers 1620(A)-(J) may be used as output transducers (e.g., speakers). For example, acoustic transducers 1620(A) and/or 1620(B) may be earbuds or any other suitable type of headphone or speaker.

The configuration of acoustic transducers 1620 of the microphone array may vary. While augmented-reality system 1600 is shown in FIG. 16 as having ten acoustic transducers 1620, the number of acoustic transducers 1620 may be greater or less than ten. In some embodiments, using higher numbers of acoustic transducers 1620 may increase the amount of audio information collected and/or the sensitivity and accuracy of the audio information. In contrast, using a lower number of acoustic transducers 1620 may decrease the computing power required by an associated controller 1650 to process the collected audio information. In addition, the position of each acoustic transducer 1620 of the microphone array may vary. For example, the position of an acoustic transducer 1620 may include a defined position on the user, a defined coordinate on frame 1610, an orientation associated with each acoustic transducer 1620, or some combination thereof.

Acoustic transducers 1620(A) and 1620(B) may be positioned on different parts of the user's ear, such as behind the pinna, behind the tragus, and/or within the auricle or fossa. Or, there may be additional acoustic transducers 1620 on or surrounding the ear in addition to acoustic transducers 1620 inside the ear canal. Having an acoustic transducer 1620 positioned next to an ear canal of a user may enable the microphone array to collect information on how sounds arrive at the ear canal. By positioning at least two of acoustic transducers 1620 on either side of a user's head (e.g., as binaural microphones), augmented-reality system 1600 may simulate binaural hearing and capture a 3D stereo sound field around about a user's head. In some embodiments, acoustic transducers 1620(A) and 1620(B) may be connected to augmented-reality system 1600 via a wired connection 1630, and in other embodiments acoustic transducers 1620(A) and 1620(B) may be connected to augmented-reality system 1600 via a wireless connection (e.g., a BLUETOOTH connection). In still other embodiments, acoustic transducers 1620(A) and 1620(B) may not be used at all in conjunction with augmented-reality system 1600.

Acoustic transducers 1620 on frame 1610 may be positioned in a variety of different ways, including along the length of the temples, across the bridge, above or below display devices 1615(A) and 1615(B), or some combination thereof. Acoustic transducers 1620 may also be oriented such that the microphone array is able to detect sounds in a wide range of directions surrounding the user wearing the augmented-reality system 1600. In some embodiments, an optimization process may be performed during manufacturing of augmented-reality system 1600 to determine relative positioning of each acoustic transducer 1620 in the microphone array.

In some examples, augmented-reality system 1600 may include or be connected to an external device (e.g., a paired device), such as neckband 1605. Neckband 1605 generally represents any type or form of paired device. Thus, the following discussion of neckband 1605 may also apply to various other paired devices, such as charging cases, smart watches, smart phones, wrist bands, other wearable devices, hand-held controllers, tablet computers, laptop computers, other external computer devices, etc.

As shown, neckband 1605 may be coupled to eyewear device 1602 via one or more connectors. The connectors may be wired or wireless and may include electrical and/or non-electrical (e.g., structural) components. In some cases, eyewear device 1602 and neckband 1605 may operate independently without any wired or wireless connection between them. While FIG. 16 illustrates the components of eyewear device 1602 and neckband 1605 in example locations on eyewear device 1602 and neckband 1605, the components may be located elsewhere and/or distributed differently on eyewear device 1602 and/or neckband 1605. In some embodiments, the components of eyewear device 1602 and neckband 1605 may be located on one or more additional peripheral devices paired with eyewear device 1602, neckband 1605, or some combination thereof.

Pairing external devices, such as neckband 1605, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1600 may be provided by a paired device or shared between a paired device and an eyewear device, thus reducing the weight, heat profile, and form factor of the eyewear device overall while still retaining desired functionality. For example, neckband 1605 may allow components that would otherwise be included on an eyewear device to be included in neckband 1605 since users may tolerate a heavier weight load on their shoulders than they would tolerate on their heads. Neckband 1605 may also have a larger surface area over which to diffuse and disperse heat to the ambient environment. Thus, neckband 1605 may allow for greater battery and computation capacity than might otherwise have been possible on a stand-alone eyewear device. Since weight carried in neckband 1605 may be less invasive to a user than weight carried in eyewear device 1602, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1605 may be communicatively coupled with eyewear device 1602 and/or to other devices. These other devices may provide certain functions (e.g., tracking, localizing, depth mapping, processing, storage, etc.) to augmented-reality system 1600. In the embodiment of FIG. 16, neckband 1605 may include two acoustic transducers (e.g., 1620(I) and 1620(J)) that are part of the microphone array (or potentially form their own microphone subarray). Neckband 1605 may also include a controller 1625 and a power source 1635.

Acoustic transducers 1620(I) and 1620(J) of neckband 1605 may be configured to detect sound and convert the detected sound into an electronic format (analog or digital). In the embodiment of FIG. 16, acoustic transducers 1620(I) and 1620(J) may be positioned on neckband 1605, thereby increasing the distance between the neckband acoustic transducers 1620(I) and 1620(J) and other acoustic transducers 1620 positioned on eyewear device 1602. In some cases, increasing the distance between acoustic transducers 1620 of the microphone array may improve the accuracy of beamforming performed via the microphone array. For example, if a sound is detected by acoustic transducers 1620(C) and 1620(D) and the distance between acoustic transducers 1620(C) and 1620(D) is greater than, e.g., the distance between acoustic transducers 1620(D) and 1620(E), the determined source location of the detected sound may be more accurate than if the sound had been detected by acoustic transducers 1620(D) and 1620(E).

Controller 1625 of neckband 1605 may process information generated by the sensors on neckband 1605 and/or augmented-reality system 1600. For example, controller 1625 may process information from the microphone array that describes sounds detected by the microphone array. For each detected sound, controller 1625 may perform a direction-of-arrival (DOA) estimation to estimate a direction from which the detected sound arrived at the microphone array. As the microphone array detects sounds, controller 1625 may populate an audio data set with the information. In embodiments in which augmented-reality system 1600 includes an inertial measurement unit, controller 1625 may compute all inertial and spatial calculations from the IMU located on eyewear device 1602. A connector may convey information between augmented-reality system 1600 and neckband 1605 and between augmented-reality system 1600 and controller 1625. The information may be in the form of optical data, electrical data, wireless data, or any other transmittable data form. Moving the processing of information generated by augmented-reality system 1600 to neckband 1605 may reduce weight and heat in eyewear device 1602, making it more comfortable for the user.

Power source 1635 in neckband 1605 may provide power to eyewear device 1602 and/or to neckband 1605. Power source 1635 may include, without limitation, lithium-ion batteries, lithium-polymer batteries, primary lithium batteries, alkaline batteries, or any other form of power storage. In some cases, power source 1635 may be a wired power source. Including power source 1635 on neckband 1605 instead of on eyewear device 1602 may help better distribute the weight and heat generated by power source 1635.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1700 in FIG. 17, that mostly or completely covers a user's field of view. Virtual-reality system 1700 may include a front rigid body 1702 and a band 1704 shaped to fit around a user's head. Virtual-reality system 1700 may also include output audio transducers 1706(A) and 1706(B). Furthermore, while not shown in FIG. 17, front rigid body 1702 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1600 and/or virtual-reality system 1700 may include one or more liquid crystal displays (LCDs), light emitting diode (LED) displays, microLED displays, organic LED (OLED) displays, digital light projector (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1600 and/or virtual-reality system 1700 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1600 and/or virtual-reality system 1700 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, bodysuits, handheld controllers, environmental devices (e.g., chairs, floor mats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As detailed above, the computing devices and systems described and/or illustrated herein broadly represent any type or form of computing device or system capable of executing computer-readable instructions, such asthose contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Discs (CDs), Digital Video Discs (DVDs), and BLU-RAY discs), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the claims. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method comprising:
accessing one or more antenna elements;
identifying one or more parameters for an antenna that is to be formed using the accessed antenna elements; and
assembling the antenna elements, using an artificial intelligence (Al) instance, into an assembled antenna that at least partially complies with the identified parameters.

2. The computer-implemented method of claim 1, wherein the Al instance assembles the antenna elements into the assembled antenna without knowledge of other antenna architectures.

3. The computer-implemented method of claim 1 or claim 2, further comprising accessing one or more antenna architectures and, wherein the Al instance uses the accessed antenna architectures as background knowledge when assembling the antenna elements into the assembled antenna.

4. The computer-implemented method of claim 1, claim 2 or claim 3, further comprising decomposing one or more antenna architectures to identify the one or more antenna elements.

5. The computer-implemented method of claim 4, wherein a same antenna architecture is decomposed into a plurality of different antenna elements.

6. The computer-implemented method of any one of the preceding claims, wherein a same set of antenna elements are assembled into a plurality of different assembled antennas; and preferably,
wherein the plurality of different assembled antennas are of one or more different antenna types.

7. The computer-implemented method of any one of the preceding claims, wherein the parameters specify a layout size constraint for the assembled antenna.

8. The computer-implemented method of any one of the preceding claims, wherein the parameters specify one or more minimum performance characteristics for the assembled antenna.

9. The computer-implemented method of any one of the preceding claims, further comprising optimizing the assembled antenna to improve one or more operational characteristics; and preferably,
wherein the Al instance accesses an indication of which operational characteristics are most significant and optimizes the assembled antenna for at least one of the indicated operational characteristics.

10. A system comprising:
at least one physical processor; and
physical memory comprising computer-executable instructions that, when executed by the physical processor, cause the physical processor to:
access one or more antenna elements;
identify one or more parameters for an antenna that is to be formed using the accessed antenna elements; and
assemble the antenna elements, using an artificial intelligence (Al) instance, into an assembled antenna that at least partially complies with the identified parameters.

11. The system of claim 10, wherein the identified parameters limit which locations one or more of the antenna elements is placeable within an electronic device.

12. The system of claim 10 or claim 11, wherein the identified parameters limit a width and/or a height for at least one of the antenna elements and/or for the assembled antenna.

13. The system of claim 10, claim 11 or claim 12, wherein the assembled antenna is analyzed by a surrogate model to identify one or more operational characteristics of the assembled antenna; and preferably,
wherein the surrogate model filters one or more assembled antennas whose performance characteristics are below a minimum performance threshold value; and preferably,
wherein the surrogate model implements a knowledge database when determining which assembled antennas to filter out.

14. The system of any one of claims 10 to 13, wherein the assembled antenna is provided to a simulation model for a performance simulation; and preferably,
wherein performance results from the simulation are provided to a surrogate model to inform future analyses by the surrogate model.

15. A non-transitory computer-readable medium comprising one or more computer-executable instructions that, when executed by at least one processor of a computing device, cause the computing device to:
access one or more antenna elements;
identify one or more parameters for an antenna that is to be formed using the accessed antenna elements; and
assemble the antenna elements, using an artificial intelligence (Al) instance, into an assembled antenna that at least partially complies with the identified parameters.
